# EUROPÄISCHE PATENTSCHRIFT

(11) **EP 0 689 505 B1**
(45) Veröffentlichungstag und Bekanntmachung des Hinweises auf die Patenterteilung: **08.10.1997**
(21) Anmeldenummer: 93912843.5
(22) Anmeldetag: 01.06.1993
(51) Int. Cl.: B32B 31/00, B32B 31/30, B32B 15/08

(54) **VERFAHREN ZUR HERSTELLUNG EINES METALL-KUNSTSTOFFOLIE-VERBUNDES, NACH DIESEM VERFAHREN HERGESTELLTER METALLKUNSTSTOFFOLIE-VERBUND SOWIE DESSEN VERWENDUNG ZUR HERSTELLUNG VON VERPACKUNGSBEHÄLTERN**
PROCESS FOR PRODUCING A METAL-PLASTIC FILM COMPOSITE MATERIAL, METAL-PLASTIC FILM COMPOSITE MATERIAL PRODUCED ACCORDING TO SAID PROCESS AND ITS USE FOR PRODUCING PACKAGING CONTAINERS
PROCEDE DE FABRICATION D'UN MATERIAU COMPOSITE CONSTITUE D'UN FILM PLASTIQUE ET DE METAL, MATERIAU COMPOSITE CONSTITUE D'UN FILM PLASTIQUE ET DE METAL FABRIQUE SELON CE PROCEDE ET SON UTILISATION DANS LA FABRICATION DE RECIPIENTS D'EMBALLAGE

(30) Priorität: 04.06.1992 DE 4218369
(43) Veröffentlichungstag der Anmeldung: 03.01.1996
(73) Patentinhaber: BASF Lacke + Farben AG, 48165 Münster-Hiltrup (DE)
(72) Erfinder: KIRIAZIS, Leonidas, Dr., D-48151 Münster (DE)
(74) Vertreter: Münch, Volker, Dr.
(86) Internationale Anmeldenummer: EP9301371
(87) Internationale Veröffentlichungsnummer: WO9324324

(56) Entgegenhaltungen:
- EP-A- 0 135 628
- EP-A- 0 312 307
- EP-A- 0 312 309
- US-A- 3 361 728
- US-T- 104 502
- DATABASE WPI Week 9018, Derwent Publications Ltd., London, GB; AN 90-137000 &
- DATABASE WPI Week 8832, Derwent Publications Ltd., London, GB; AN 88-225020 &

## Beschreibung

Die vorliegende Erfindung betrifft ein Verfahren zur Herstellung eines Metall-Kunststoffolie-Verbundes durch Breitschlitzdüsenextrusion von statistischem Polypropylencopolymerisat zu einer Kunststoffolie, wobei nach dem Austritt des Polypropylens aus der Breitschlitzdüse mittels Kühlwalzen abgekühlt wird und die erhaltene Kunststoffolie auf mindestens eine der Hauptoberflächen eines Metallblechs auflaminiert wird. Die Erfindung betrifft weiterhin nach dem erfindungsgemäßen Verfahren hergestellte Metall-Kunststoffolie-Verbunde sowie die Verwendung dieser Verbunde zur Herstellung von Verpackungsbehältern.

Zur Herstellung einer Dose oder eines Verschlusses für den Einsatz als Verpackungsmaterial, insbesondere für die Verpackung von Lebensmitteln, werden Bleche aus Weißblech, chromatiertem Stahl wie ECCS (electroliytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführten Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu den Dosen oder Verschlüssen auftretenden mechanischen Beanspruchungen, etwa beim Verformen, Stanzen, Bördeln, Sicken u.ä. der Bleche, standhalten.

Außerdem müssen aufgrund von hohen Lösemittelemissionen beim Trocknen der Lackschicht Vorkehrungen getroffen werden, diese Emissionen und die damit verbundene Umweltbelastung so gering wie möglich zu halten.

Als vorteilhaftes Verfahren für die Beschichtung von Blechen, die insbesondere zur Herstellung von Lebensmittelverpackungen eingesetzt werden, hat sich die Folienbeschichtung von Metallblechen erwiesen. So ist beispielsweise in der DE-OS 3 128 641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird.

Weiterhin sind auch aus der DE-OS 2 912 023, der GB-A-2027391 und der EP-B-31701 Laminate und aus diesen Laminaten hergestellte Lebensmittelverpackungsbehälter, insbesondere Beutel, bekannt.

Metall-Kunststoff-Verbunde werden auch zum Beispiel zu Ventiltellerträgern für Aerosoldosen gestanzt.

Die Folien für Metall-Kunststoffolie-Laminate werden üblicherweise in eiem Extrusionsverfahren hergestellt, bei dem Extruder mit Thermoplasten in Form von Pulvern oder Granulaten beschickt werden, das Material homogenisiert, plastifiziert, mit Hilfe von Schnecken transportiert und durch eine formgebende Düse im Spritzkopf gepreßt wird. Für die Herstellung von Polypropylenfolien ist insbesondere das Breitschlitzdüsenextrusionsverfahren (Chill-roll-Verfahren) geeignet, bei dem die Masse aus einem breiten Schlitz (Düsenspalt) austritt. Bei diesem Extrusionsverfahren tritt die Schmelze heiß aus der sogenannten Breitschlitzdüse, und die gebildeten Folien laufen direkt anschließend über eine Kühlwalze oder über mehrere Kühlwalzen und werden dabei abgekühlt. Nach dem Abkühlen der Folien erfolgt die Randbeschneidung, die Folien werden dann üblicherweise Corona-vorbehandelt und anschließend aufgewickelt.

Es ist bekannt, daß die Kühlwalzentemperatur die Kristallinität und damit die optischen und mechanischen Eigenschaften der Folien beeinflußt, wobei niedrige Kühlwalzentemperaturen zu Folien mit höherer Transparenz und Zähigkeit, jedoch mit geringerer Steifigkeit und höherer Blockneigung führen. Es ist jedoch weiterhin bekannt, daß das Abschrecken von Folien zu Spannungen führen kann. Übliche Kühlmittelzulauftemperaturen liegen zwischen 15°C und 30°C.

In üblichen Chill-roll-Anlagen werden Polypropylen-Mono- und Coexfolien hergestellt, wobei die Kühlwalzen auf Temperaturen oberhalb von 20°C gekühlt werden. Bei derart hergestellten, auf Metall laminierten Folien tritt das Problem auf, daß die Laminate nach dem Stanzen erheblichen Weißbruch zeigen. Die Weißbruchneigung derartig hergestellter Metall-Folie-Verbunde ist besonders ausgeprägt bei Kunststoffolien auf Basis von statistischen Polypropylencopolymerisaten.

Aus der EP-B-312 309 schließlich ist ein Verfahren bekannt zur Herstellung von Metall-Polypropylen-Laminaten, bei dem eine Polypropylenfolie auf ein Metallblech laminiert und auf eine über den Schmelzpunkt des Polypropylens liegende Temperatur erhitzt wird, wobei das Laminat anschließend auf Raumtemperatur abgekühlt wird durch Fluten mit kalter Flüssigkeit. Die Vorteile des bekannten Verfahrens sind darin zu sehen, daß Unebenheiten der Beschichtung unterdrückt werden. Bei dem aus der EP-B-312 309 bekannten Verfahren tritt jedoch das Problem auf, daß die derart hergestellten Laminate nicht völlig weißbruchfrei sind.

Der vorliegenden Erfindung lag daher die Aufgabe zugrunde, ein Verfahren zur Herstellung von Metall-Kunststoff-Verbunden auf Basis von Polypropylen-Random-Copolymerisaten zu entwickeln, bei dem Verbunde ohne Weißbruch, die sich zur Herstellung von Verpackungsbehältern, insbesondere für den Lebensmittelsektor, eignen, hergestellt werden. Die Metall-Kunststoff-Verbunde sollten hervorragende Barriere-Eigenschaften besitzen, wobei unter Barriere-Eigenschaften eine geringe Lichtdurchlässigkeit, geringe Wasserdampf-Durchlässigkeit und allgemein eine geringe Gasdurchlässigkeit verstanden werden sollen. Die Verbunde sollten insbesondere zur Verpackung von Lebensmitteln und Genußmitteln geeignet sein.

Diese Aufgabe wird überraschenderweise gelöst durch ein Verfahren zur Herstellung eines Metall-Kunststoffolie-Verbundes durch Breitschlitzdüsenextrusion von statistischem Polypropylencopolymerisat zu einer Kunststoffolie, wobei nach dem Austritt des Polypropylens aus der Breitschlitzdüse mittels Kühlwalzen abgekühlt wird und die erhaltene Kunststoffolie auf ein Metallblech auflaminiert wird, das dadurch gekennzeichnet ist, daß das Polypropylencopolymerisat direkt nach dem Austritt aus der Breitschlitzdüse des Extruders auf Temperaturen zwischen 0°C und 15°C abgeschreckt wird und nach dem Auflaminieren der Kunststoffolie auf das Metallblech mittels eines lösemittelhaltigen oder wäßrigen Klebstoffes der erhaltene Metall-Kunststoffolie-Verbund auf Temperaturen von 0°C bis 25°C abgekühlt wird, wenn das Laminieren der Folie auf das Metallblech bei Temperaturen oberhalb des Schmelzpunktes des Polypropylencopolymerisates der Kunststoffolie erfolgt, bzw. nach dem Auflaminieren der Kunststoffolie auf das Metallblech mittels eines coextrudierten Haftvermittlers der erhaltene Metall-Kunststoffolie-Verbund auf Temperaturen von 0°C bis 25°C abgekühlt wird.

Bevorzugt wird dabei das extrudierte Polypropylencopolymerisat direkt nach dem Austritt aus der Breitschlitzdüse des Extruders auf Temperaturen im Bereich von 5°C bis 10°C abgeschreckt.

Es war überraschend und nicht vorhersehbar, daß bei dem erfindungsgemäßen Verfahren keine Spannungen der Folien auftreten und die Folien bzw. die Metall-Kunststoffolie-Verbunde nach dem Stanzen keinen Weißbruch mehr aufweisen.

Gemäß dein vorliegenden Verfahren werden z.B. folgende Kühlmittel zur Walzenkühlung nach der Breitschlitzdüsenextrusion verwendet: Wasser, Wasser-Viehsalz-Mischungen, Kühlmittel beispielsweise auf der Basis von Ethylenglykol, z. B. das auf dem Markt unter der Bezeichnung Glysantin® (BASF AG) erhältliche Kühlmittel.

Die Kühlmittelzulauftemperaturen liegen im Bereich von 0 °C bis 15 °C. Aufgrund der Dicke der extrudierten Folien im Bereich von üblicherweise 10 bis 250 µm und der üblichen hohen Produktionsgeschwindigkeiten werden die aus der Breitschlitzdüse austretenden Polypropylen-Random-Copolymerisat-Folien daher unmittelbar auf Temperaturen zwischen 0°C und 15°C gebracht.

Die in dem erfindungsgemäßen Verfahren verwendeten statistischen Polypropylencopolymerisate sind vorzugsweise Random-Copolymerisate aus 92 bis 99 Gew.-% Propylen und 1 bis 8 Gew.-% Comonomeren, jeweils bezogen auf das Gesamtgewicht der Monomerenzusammensetzung. Geeignete Comonomere sind C₂- bis C₁₂-, bevorzugt C₂- bis C₆-α-Monoolefine, wie beispielsweise Ethen, Buten-1, 4-Methylpenten-1, Hexen-1, n-Okten-1, n-Decen-1 sowie n-Dodecen-1. Derartige Polypropylen-Copolymerisate sind gut bekannt und in einer Vielzahl auf dem Markt erhältlich, zum Beispiel unter der Bezeichnung Novolen der Firma BASF AG. Die statistischen Copolymerisate sind beispielsweise herstellbar in dem in der DE-A-37 30 022 beschriebenen Verfahren. Sie haben einen Schmelzindex MFI 230°C/2,16 Kp im Bereich von 4 bis 12 g/10 min (gemessen nach DIN 53 735).

Die aus den Polypropylen-Random-Copolymerisaten erhältlichen Folien dienen als thermoplastische Deckschicht des Metall-Kunststoffolie-Verbundes. Selbstverständlich können auch zusammengesetzte Folien, die erhalten werden durch gemeinsames Extrudieren von mindestens zwei unterschiedlichen Harzen, als Deckschicht des Verbundes verwendet werden. So können die statistischen Polypropylen-Copolymerisate beispielsweise mit anderen Random-Copolymerisaten oder mit Polypropylen-Homopolymerisaten oder auch mit weiteren Polyolefinen, Polyamiden, Polyestern, Polyvinylchlorid, Polyvinylidenchlorid und Polycarbonaten gemischt und zusammen extrudiert werden. Die bevorzugte thermoplastische Folie, die die innerste Schicht (dies ist die mit den Füllgütern in Kontakt stehende Schicht) des Metall-Kunststoffolie-Verbundes darstellt, umfaßt jedoch ausschließlich Polypropylen-Random-Copolymerisate.

In dem erfindungsgemäßen Verfahren werden besonders bevorzugt als Basismaterial für die Kunststoffolien statistische Polypropylen-Copolymerisate verwendet, die erhalten werden durch Random-Copolymerisation von 1 bis 4 Gew.-% Ethylen und 99 bis 96 Gew.-% Propylen, jeweils bezogen auf das Gesamtgewicht der Monomerenzusammensetzung. Die nach dem erfindungsgemäßen Verfahren unter Verwendung dieser Copolymerisate hergestellten Metall-Kunststoffolie-Verbunde weisen keinerlei Weißbruch nach dem Stanzen auf.

Die thermoplastischen Polypropylencopolymerisat-Folien enthalten üblicherweise noch Additive, wie zum Beispiel innere und äußere Gleitmittel, Antiblockmittel, Stabilisatoren, Antioxidantien, Pigmente, Kristallisationshilfsmittel und dergleichen. Diese Additive werden in den für die Herstellung, Verarbeitung, Konfektionierung und Anwendung notwendigen Mengen in Form von Pulver, Puder, Granulate oder einem direkt in dem Polymer eingearbeiteten Konzentrat eingesetzt. Nähere Angaben zu den üblicherweise eingesetzten Mengen und Beispiele für geeignete Additive sind beispielsweise dem Gächter-Müller, Kunststoffadditive, Carl-Hanser Verlag zu entnehmen.

In dem erfindungsgemäßen Verfahren können Monofolien oder Mehrschichtfolien eingesetzt werden, die mittels eines lösemittelhaltigen oder wäßrigen Klebstoffes auf das Metallblech auflaminiert werden. Darüber hinaus ist es aber auch möglich, daß der Polypropylenkunststoff zusammen mit einem Haftvermittler coextrudiert wird und die erhaltene Coexfolie auf das Metallblech auflaminiert wird.

Die als Klebstoff oder als Haftvermittlerschicht in dem erfindungsgemäßen Verfahren eingesetzten Polymeren können sowohl Copolymere, Terpolymere, Pfropfcopolymere und Ionomere sein, mit der Maßgabe, daß sie Carboxyl- oder Anhydridgruppen oder Gruppen, die zu Carboxylgruppen hydrolysierbar sind, aufweisen und daß der Schmelzindex der Polymeren gemessen bei 190°C und einer Belastung von 2,16 kg zwischen 0,1 und 30 g/10 min., bevorzugt zwischen 0,2 und 25 g/min und besonders bevorzugt zwischen 0,5 und 20 g/10 min liegt.

Geeignete Co- bzw. Terpolymere sind herstellbar durch Copolymerisation von Ethylen mit α,β-ungesättigten Carbonsäuren wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest, wie z.B. die Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium-, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entstehende Polymer einen Carboxylgruppengehalt von 0,1 bis 30 Gew.-% bevorzugt 2 bis 20 Gew.-% aufweist.

Geeignete Propfcopolymere sind herstellbar durch Pfropfung von mindestens einem Polymer aus der Gruppe der Polyolefine mit bis 10 Gew.-%, bevorzugt bis zu 5 Gew.-%, bezogen auf das Gesamtgewicht der Monomeren mindestens eines Monomeren aus der Gruppe der α,β-ungesättigten Carbonsäuren, deren Anhydride, deren Estern oder Salzen in Gegenwart oder Abwesenheit von Peroxiden. In der DE-A-38 00 307 und der DE-A-36 39 564 werden geeignete Haftvermittler auf Basis von Pfropfcopolymerisaten sowie Verfahren zu deren Herstellung beschrieben.

Die als Haftvermittlerschicht eingesetzten Ionomeren sind herstellbar durch die bereits oben beschriebene Copolymerisation von Ethylen und ggf. weiteren Monomeren mit Salzen α,β-ungesättigter Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammmonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.

Besonders bevorzugt wird als Haftvermittler, der mit dem Polypropylen-Random-Copolymerisat coextrudiert wird, ein polarmodifiziertes, bevorzugt ein mit Maleinsäureanhydrid gepfropftes, Polypropylen verwendet.

Die in Frage kommenden Klebstoffe werden durch Auftragen aus Lösungen oder Dispersionen in Wasser oder organischen Lösemitteln aufgebracht. Die Lösungen oder Dispersionen haben in der Regel einen Klebstoffgehalt von 5 bis 60 Gew.-%. Besonders geeignete Klebstoffe enthalten thermoplastiche Harze, wie Celluloseester, Celluloseether, Acrylester, Polyamide, Polyurethane und Polyester, wärmehärtende Harze, wie Epoxidharze, Harnstoff-Formaldehydharze, Phenol-Formaldehyd-Harze und Melamin-Formaldehydharze. Bevorzugt wird als Klebstoff ein lösemittelhaltiger Zweikomponenten-Polyurethan-Klebstoff verwendet.

Als Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind.

Gemäß dein erfindungsgemäßen Verfahren wird die Polypropylenfolie auf das Metallblech auflaminiert, wobei zur Haftung der Folie auf dem Metall entweder ein lösemittelhaltiges oder wäßriges Klebemittel oder ein coextrudierter Haftvermittler verwendet wird. Die Herstellung der Metall-Kunststoffolie-Verbunde mittels Haftvermittler ist ein allgemein bekanntes Verfahren.

Es wird dabei so vorgegangen, daß zunächst der thermoplastische Kunststoff und der Haftvermittler coextrudiert werden. Das Metallblech wird dann mit der coextrudierten Folie derart bedeckt, daß die Haftvermittlerschicht der Coexfolie die Metalloberfläche berührt. Durch Anwendung von Druck und Wärme wird entweder mittels einer temperierbaren Presse oder im Walzenspalt eines Walzwerkes oder Kalanders mittels temperierbarer Walzen der Polypropylendeckschicht-Haftvermittler-Metall-Verbund hergestellt. Der Druck und die Temperatur sind dabei so zu wählen, daß der Haftvermittler eine feste und stabile Verbindung mit der Metallfolie bzw. dem Metallblech eingeht und daß andererseits die thermoplastische Deckschicht möglichst nicht aufschmilzt. Nach dem Laminieren wird der Verbund auf Temperaturen von 0°C bis 25°C abgekühlt. Dabei wird bevorzugt so vorgegangen, daß der Verbund durch ein Kühlbad geleitet wird. Es ist aber auch möglich, die Laminate durch ein Luftgebläse abzukühlen.

Die Herstellung des Metall-Kunststoffolie-Verbundes mittels eines lösemittelhaltigen oder wäßrigen Klebstoffes erfolgt derart, daß der Kleber auf ein Metallblech appliziert wird, erhitzt wird, und die Kunststoffolie unter Anwendung von Druck und Wärme auf das Blech aufkaschiert wird.

Das Verkleben von Polypropylenfolie mittels eines wäßrigen oder lösemittelhaltigen Klebstoffes auf Metall kann auf langsam-laufenden Anlagen, d.h. bei Kaschiergeschwindigkeiten von 5 bis 60 m/min. bei Temperaturen unterhalb von 130°C stattfinden. Wenn das Auflaminieren der Kunststoffolie auf das Metallblech bei Temperaturen unterhalb von 130°C stattfindet, ist es i. a. nicht nötig, den erhaltenen Metall-Kunststoffolie-Verbund abzukühlen, da kein Aufschmilzen der Polypropylen-Kunststoffolie erfolgt. Erfindungsgemäß wird jedoch nach dem Auflaminieren der Kunststoffolie auf das Metallblech der erhaltene Metall-Kunststoffolie-Verbund auf Temperaturen von 0°C bis 25°C abgekühlt, wenn das Auflaminieren der Folie auf das Metallblech bei Temperaturen oberhalb des Schmelzpunktes der Polypropylenkunststoffolie, d. h. im allgemeinen oberhalb von 130°C erfolgt. Bei schnell-laufenden Anlagen wird mit Geschwindigkeiten zwischen 60 und 150 m/min. verklebt bzw. kaschiert, so daß erhöhte Temperturen von etwa 180°C bis 220°C nötig sind zur Herstellung der Metall-Kunststoffolie-Verbunde. In diesem Fall erfolgt erfindungsgemäß nach dem Auflaminieren der Folie auf das Metallblech und dem Erhitzen des Laminates ein Abschrecken des Verbundes auf Temperaturen von 0°C bis 25°C. Der Verbund wird beispielsweise abgeschreckt, indem er durch ein Kühlbad geleitet wird.

Nach dem Kaschieren der Folie auf das Metallblech wird das Laminat auf Temperaturen von 0°C bis 25°C abgekühlt, wenn das Laminieren der Folie auf das Metallblech bei Temperaturen oberhalb des Schmelzpunktes des Polypropylens der Kunststoffolie erfolgt.

Das Abschrecken der Laminate kann zum Beispiel in einem Eis-Wasserbad bzw. Wasserbad erfolgen, durch das die Laminate bewegt werden. Des weiteren ist es, wie bereits erwähnt, möglich, die Metall-Kunststoff-Verbunde durch ein Luftgebläse abzukühlen.

Die Beschichtung des Metallblechs bzw. die thermoplastische Verbundfolie weist im allgemeinen eine Gesamttrockenfilmstärke von weniger als 500 µm, bevorzugt 10 bis 200 µm auf. Die Stärke der Haftvermittlerschicht bzw. der Klebeschicht liegt dabei zwischen 0,5 und 100 µm. Die Stärke der Deckschicht ergibt sich entsprechend zu Werten zwischen 10 und 499,5 µm.

Gemäß der vorliegenden Erfindung sind unter den Metall-Kunststoffolie-Verbunden auch Laminate zu verstehen, bei denen das Metallblech beidseitig mit einer Polypropylenfolie beschichtet ist.

Die Erfindung betrifft ebenfalls die nach dem erfindungsgemäßen Verfahren hergestellten Metall-Kunststoffolie-Verbunde. Diese werden beispielsweise zu Dosen, Gläserverschlüssen, Kronkorken- oder zu Ventiltellerträgern für Aerosoldosen gestanzt. Die Verbunde zeichnen sich insbesondere dadurch aus, daß sie keinerlei Weißbruch aufweisen. Wenn zum Vergleich die Polypropylencopolymerisate nach dem Austritt aus der Breitschlitzdüse des Extruders nicht auf Temperaturen von 0°C bis 15°C abgekühlt werden und wenn nach dem Auflaminieren der Folien auf das Metallblech bei Temperaturen oberhalb von 130°C nicht auf Temperaturen von 5°C bis 25°C abgekühlt wird, weisen Folien der Metall-Kunststoff-Verbunde deutlichen Weißbruch auf.

Die erfindungsgemäßen Metall-Kunststoffolie-Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600 - 606: W. Panknin, A. Breuer, M. Sodeik, "Abstreckziehen als Verfahren zum Herstellen von Dosen aus Weißblech"; SHEET METAL INDUSTRIES, Audust 1976: W. Panknin, CH. Schneider, M. Sodeik, "Plastic Deformation of Tinplate in Can Manufacturing"; Verpackungs-Rundschau, Heft 4/1971, Seiten 450-458: M. Sodeik, I. Siewert, "Die nahtlose Dose aus Weißblech"; Verpackungs-Rundschau, Heft 11/1975, Seiten 1402 bis 1407: M. Sodeik, K. Haaß, I. Siewert, "Herstellen von Dosen aus Weißblech durch Tiefziehen"; Arbeitsmappe für den Verpackungspraktiker, Metalle, Teil II, Gruppe 2, Weißblech, Lfd.-Nr. 220.042 bis 220.048 in neue Verpackung 12/87, Seite B 244 bis B 246 und neue Verpackung 1/88, Seiten B 247 bis B 250).

Bezüglich näherer Einzelheiten wird daher auf die Literatur verwiesen.

Nachfolgend wird die Erfindung anhand von Ausführungsbeispielen näher erläutert:

### Beispiel 1:

Ein handelsübliches Polypropylen-Copolymerisat (Handelsname Novolen® 3225 MCX der Firma BASF AG) wird mit einem handelsüblichen Haftvermittler auf Basis von mit Maleinsäureanhydrid gepfroptem Polypropylen (Handelsbezeichnung Modic P 301 der Firma Mitsubishi Chemical Ind.) auf einer Breitschiitzdüsenextrusionsanlage coextrudiert.
Beide Materialien werden in Granulatform verwendet. Der Hauptextruder ist ein 90 mm ⌀ 25 D Extruder der Firma Barmag, der Coextruder ist ein 45 mm 0 25 D Extruder der Firma Schwabethan. Die Buchse des Hauptextruders ist geglättet, während die Buchse des Coextruders genutet ist. Die Massetemperatur des Polypropylens Novolen 3225 MCX beträgt 260°C, die des Haftvermittlers 232°C. Der Massedruck des Novolens beträgt 60 bar, der des Haftvermittlers 35 bar. Die Zonentemperaturen des Hauptextruders liegen zwischen 210°C und 235°C, die des Coextruders zwischen 180°C und 210°C. Die mit Wasser gekühlte Chill-Roll-Kühlwalze hat eine Temperatur von 10°C. Die Schichtdicke der Polypropylenträgerfolie beträgt 40 µm, die der Haftvermittlerfolie 10 µm. Es wird ein Luftrakel mit 60 mbar betrieben.

Mit Hilfe temperierbarer Walzen, die eine Temperatur von 30°C aufweisen, wird die coextrudierte Folie auf ein auf 170°C erhitztes Metallblech kaschiert. Das erhaltene Laminat wird anschließend durch ein Wasserbad, welches eine Temperatur von 16°C aufweist, geleitet.

Der erhaltene Metall-Kunststoffolie-Verbund wird gestanzt. Er ist weißbruchfrei.

### Beispiel 2:

Das Beispiel 1 wird wiederholt mit dem Unterschied, daß bei der Breitschlitzdüsenextrusion die coextrudierte Folie nach dem Austritt aus der Breitschlitzdüse auf 20°C abgekühlt wird. Der erhaltene Metall-Kunststoff-Verbund weist nach dem Stanzen Weißbruch auf.

### Beispiel 3:

Das unter der Handelsbezeichnung Novolen® 3225 MCX (BASF AG) erhältliche Polypropylen-Copolymerisat wird auf einer Breitschlitzdüsenextrusionsanlage der Firma Barmag (90 mm ⌀ 25 D) extrudiert. Das Polypropylen wird in Granulatform eingesetzt. Die Buchse des Extruders ist geglättet. Die Massetemperatur des Polypropylen-Kunststoffs beträgt 260°C, der Massedruck beträgt 60 bar. Die Zonentemperaturen des Extruders liegen zwischen 210°C und 235°C. Nach dem Austritt aus der Breitschlitzdüse wird die Folie mit Hilfe einer mit Wasser gekühlten Kühlwalze auf 8°C abgekühlt. Die Schichtdicke der Polypropylenfolie beträgt 80 µm. Es wird ein Luftrakel mit 60 mbar betrieben.

In 6 bis 8 µm Naßfilmstärke wird ein handelsüblicher lösemittelhaltiger Zweikomponenten-Polyurethankleber durch Rollen auf ein Metallblech aufgebracht und durch einen Ofen mit einer Temperatur von etwa 180°C gefahren. Die Polypropylenfolie wird auf die Metallfolie, auf die der Kleber aufgebracht ist, kaschiert bei einer Temperatur von 110°C. Der erhaltene Metall-Kunststoffolie-Verbund wird gestanzt. Er ist völlig weißbruchfrei.

### Beispiel 4:

Beispiel 3 wird wiederholt mit dem Unterschied, daß das Kaschieren der Polypropylenfolie auf das Metallblech bei einer Temperatur von 180°C durchgeführt wird. Der erhaltene Verbund weist nach dem Stanzen Weißbruch auf.

### Beispiel 5:

Beispiel 3 wird wiederholt mit dem Unterschied, daß das Kaschieren der Polypropylenfolie auf das Metallblech bei einer Temperatur von 180°C durchgeführt wird. Der erhaltene Metall-Kunstoff-Verbund wird nach dem Kaschiervorgang durch ein Wasserbad, welches eine Temperatur von 10°C aufweist, bewegt. Das erhaltene Laminat ist nach dem Stanzen weißbruchfrei.

## Patentansprüche

1. Verfahren zur Herstellung eines Metall-Kunststoffolie-Verbundes durch Breitschlitzdüsenextrusion von statistischem Polypropylencopolymerisat zu einer Kunststoffolie, wobei nach dem Austritt des Polypropylens aus der Breitschlitzdüse mittels Kühlwalzen abgekühlt wird und die erhaltene Kunststoffolie auf mindestens eine der Hauptoberflächen eines Metallblechs auflaminiert wird, dadurch gekennzeichnet, daß das Polypropylencopolymerisat direkt nach dem Austritt aus der Breitschlitzdüse des Extruders auf Temperaturen zwischen 0°C und 15°C abgeschreckt wird und nach dem Auflaminieren der Kunststoffolie auf das Metallblech mittels eines lösemittelhaltigen oder wäßrigen Klebstoffes der erhaltene Metall-Kunststoffolie-Verbund auf Temperaturen von 0°C bis 25°C abgekühlt wird, wenn das Laminieren der Folie auf das Metallblech bei Temperaturen oberhalb des Schmelzpunktes des Polypropylencopolymerisats der Kunststoffolie erfolgt, bzw. nach dem Auflaminieren der Kunststoffolie auf das Metallblech mittels eines coextrudierten Haftvermittlers der erhaltene Metall-Kunststoffolie-Verbund auf Temperaturen von 0°C bis 25°C abgekühlt wird.

2. Verfahren nach Anspruch 1, dadurch gekennzeichnet ist, das das Polypropylencopolymerisat direkt und dem Austritt aus der Breitschlitzdüse des Extruders auf Temperaturen im Bereich von 5°C bis 10°C abgeschreckt wird.

3. Verfahren nach Anspruch 1 oder 2, dadurch gekennzeichnet, daß die Polypropylen-Kunststoffolie eine Monofolie ist, die mittels eines lösemittelhaltigen Polyurethan-Klebstoffs auf das Metallblech auflaminiert wird.

4. Verfahren nach Anspruch 1 oder 2, dadurch gekennzeichnet, daß der Polypropylen-Kunststoff zusammen mit einem Haftvermittler aus polarmodifiziertem Polypropylen coextrudiert wird und die Coexfolie anschließend auf das Metallblech auflaminiert wird.

5. Verfahren nach einem der Ansprüche 1 bis 4, dadurch gekennzeichnet, daß das statistische Polypropylencopolymerisat erhältlich ist aus 1 bis 4 Gew.-% Ethylen und 99 bis 96 Gew.-% Propylen, bezogen auf das Gesamtgewicht der Monomerenzusammensetzung.

6. Metall-Kunststoffolie-Verbund, hergestellt nach einem oder nach mehreren der Ansprüche 1 bis 5.

7. Verwendung der Metall-Kunststoffolie-Verbundes nach Anspruch 6 zur Herstellung von Verpackungsbehältern.

## Claims

1. Process for producing a metal-plastic film laminate by slot die extrusion of random polypropylene copolymer as a film which, on emerging from the slot die, is cooled by means of chill rolls and laminated onto at least one of the main surfaces of a metal sheet, characterized in that the polypropylene copolymer is quenched to temperatures between 0°C and 15°C directly on emerging from the slot die of the extruder and, after the plastic film has been laminated to the metal sheet by means of a solvent-containing or aqueous adhesive, the resulting metal-plastic film laminate is cooled to temperatures of 0°C to 25°C when the laminating of the film onto the metal sheet has taken place at temperatures above the melting point of the polypropylene copolymer of the plastic film, or, after the plastic film has been laminated onto the metal sheet by means of a coextruded adhesion promoter, the resulting metal-plastic film laminate is cooled to temperatures of 0°C to 25°C.

2. Process of Claim 1, characterized in that the polypropylene copolymer is quenched to temperatures within the range from 5°C to 10°C directly and [sic] emerging from the slot die of the extruder.

3. Process of Claim 1 or 2, characterized in that the polypropylene plastic film is a mono film which is laminated onto the metal sheet by means of a solvent-containing polyurethane adhesive.

4. Process of Claim 1 or 2, characterized in that the polypropylene plastic is coextruded together with an adhesion promoter comprising polar modified polypropylene and the coex film is then laminated onto the metal sheet.

5. Process of any one of Claims 1 to 4, characterized in that the random polypropylene copolymer is obtainable from 1 to 4% by weight of ethylene and 99 to 96% by weight of propylene, based on the total weight of the monomer composition.

6. Metal-plastic film laminate produced according to one or more of Claims 1 to 5.

7. Use of the metal-plastic film laminate of Claim 6 for manufacturing packaging containers.

## Revendications

1. Procédé de fabrication d'un matériau composite constitué d'un film plastique et de métal par extrusion à buse à fente large d'un copolymère statistique de polypropylène pour former une feuille de plastique, dans lequel on procède, après la sortie du polypropylène de la buse à fente large, au refroidissement à l'aide de rouleaux de refroidissement et au laminage de la feuille de plastique obtenue sur au moins l'une des surfaces principales d'une tôle métallique, caractérisé en ce que le copolymère de polypropylène subit une trempe à des températures comprises entre 0°C et 15°C directement après la sortie de la buse à fente large de l'extrudeuse, et que l'on procède, après le laminage de la feuille de plastique sur la tôle métallique, au refroidissement du matériau composite obtenu constitué d'un film plastique et de métal, à des températures allant de 0°C à 25°C, à l'aide d'un adhésif contenant des solvants ou à l'aide d'un adhésif aqueux, quand le laminage de la feuille sur la tôle métallique se fait à des températures supérieures au point de fusion du copolymère de polypropylène de la feuille de plastique, respectivement que l'on procède, après le laminage de la feuille de plastique sur la tôle métallique, au refroidissement du matériau composite obtenu constitué d'un film plastique et de métal à des températures allant de 0°C à 25°C, à l'aide d'un promoteur d'adhésion co-extrudé.

2. Procédé selon la revendication 1, caractérisé en ce que le copolymère de polypropylène subit une trempe à des températures dans le domaine de 5°C à 10°C directement après la sortie de la buse à fente large.

3. Procédé selon la revendication 1 ou 2, caractérisé en ce que la feuille de plastique de polypropylène est une monofeuille, qui est laminée sur la tôle métallique à l'aide d'un adhésif de polyuréthane contenant des solvants.

4. Procédé selon la revendication 1 ou 2, caractérisé en ce que le plastique de polypropylène est co-extrudé conjointement à un promoteur d'adhésion en polypropylène modifié en polarité, et que la feuille co-extrudée est ensuite laminée sur la tôle métallique.

5. Procédé selon l'une quelconque des revendications 1 à 4, caractérisé en ce que le copolymêre statistique de polypropylène peut s'obtenir à partir de 1 à 4 % en poids d'éthylène et de 99 à 96 % en poids de propylène, par rapport au poids total de la composition de monomères.

6. Matériau composite constitué d'un film plastique et de métal, fabriqué conformément à l'une ou à plusieurs des revendications 1 à 5.

7. Utilisation du matériau composite constitué d'un film plastique et de métal selon la revendication 6 en vue de la fabrication de récipients d'emballage.
